# EUROPEAN PATENT APPLICATION

(11) **EP 4 538 130 A1**
(43) Date of publication of application: **16.04.2025**
(21) Application number: 23819572.1
(22) Date of filing: 11.05.2023
(51) Int. Cl.: B60W 30/09, B60W 30/10, B60W 60/00, G08G 1/16

(54) **VEHICLE MOTION CONTROL DEVICE, AND VEHICLE MOTION CONTROL METHOD**

(30) Priority: 07.06.2022 JP 2022092359
(71) Applicant: Hitachi Astemo, Ltd., Ibaraki 312-8503 (JP)
(72) Inventor: NASU, Shingo, Tokyo 100-8280 (JP); UENO, Kentarou, Hitachinaka-shi, Ibaraki 312-8503 (JP); SETO, Shinji, Tokyo 100-8280 (JP)
(74) Representative: MERH-IP Matias Erny Reichl Hoffmann Patentanwälte PartG mbB
(86) International application number: PCT/JP2023/017649
(87) International publication number: WO 2023/238588

(57) **Abstract**

Provided is a vehicle motion control device that suppresses vehicle vibration when a deceleration factor occurs in a host vehicle. The vehicle motion control device includes: a first target speed and acceleration calculator that calculates first target speed and acceleration on a basis of a travel route that a host vehicle is traveling on, including a bend; a second target speed and acceleration calculator that calculates second target speed and acceleration on the basis of a factor other than a factor causing the travel route to bend; and a third target speed and acceleration calculator that calculates third target speed and acceleration that are command values when the host vehicle is traveling. In the vehicle motion control device, the third target speed and acceleration calculator generates, on the basis of the first target speed and acceleration and the second target speed and acceleration, a speed and acceleration plan for an interval until the host vehicle reaches the other factor, or a speed and acceleration plan for an interval until the host vehicle reaches a predetermined position determined on the basis of the other factor, and changes a method for calculating the third target speed and acceleration on the basis of an evaluation result of the speed and acceleration plan.

## Description

### Technical Field

The present invention relates to a vehicle motion control device and a vehicle motion control method for controlling the motion of a vehicle in accordance with a travel route.

### Background Art

As a type of vehicle motion control technology represented by driving assistance and autonomous driving, there is a known technology that generates a travel path including information such as a target travel route and travel speed for a host vehicle, and controls the power train, brakes, steering, and the like so that the vehicle travels along the travel path. The simplest travel speed control includes, for example, speed maintenance control that maintains a set travel speed.

In addition, a more advanced travel speed control technology is disclosed in Patent Literature 1. For example, paragraph 0012 of the same literature states, "A preceding vehicle detection determination unit 11 outputs, to a target vehicle speed correction unit 14 for curve passage and a target vehicle speed switching unit 15, a signal indicating whether or not a preceding vehicle traveling in front of a host vehicle is detected, on the basis of the output signal from a vehicle-to-vehicle distance detection device 1. A target vehicle speed calculation unit 12 for vehicle following calculates a target vehicle speed according to the relative positional relationship between the preceding vehicle and the host vehicle, that is, a target vehicle speed (first target vehicle speed) for following the preceding vehicle." Paragraph 0013 states, "A target vehicle speed calculation unit 13 for curve passage calculates a target vehicle speed (second target vehicle speed) for passing a curved road, on the basis of the shape of the curved road in front of the host vehicle. The target vehicle speed correction unit 14 for curve passage calculates a target vehicle speed (third target vehicle speed) when the preceding vehicle is lost on the curved road, on the basis of the target vehicle speed calculated by the target vehicle speed calculation unit 13 for curve passage."

As described above, in Patent Literature 1, when the preceding vehicle is lost on the curved road, vehicle speed control is performed on the basis of the position of the preceding vehicle on the curved road immediately before losing sight of the preceding vehicle, and the second target vehicle speed, thereby estimating how the preceding vehicle will travel on the curved road after losing sight of the preceding vehicle and preventing the driver from feeling uncomfortable as if he or she is falling behind the preceding vehicle.

### Citation List

### Patent Literature

Patent Literature 1: Japanese Unexamined Patent Application Publication No. 2008-162564

### Summary of Invention

### Technical Problem

However, the driving assistance method disclosed in Patent Literature 1 is only a technology for suppressing a reduction in the target vehicle speed of the host vehicle when the vehicle loses sight of the preceding vehicle on a curved road, and is not a technology for improving the ride quality and comfort for occupants.

Therefore, when the technology of Patent Literature 1 is used to try to shift from a state in which the host vehicle is traveling alone along with the shape of the curved road in front of the host vehicle to a state in which the host vehicle follows a detected moving object such as a preceding vehicle traveling in front of the host vehicle, the number of times of acceleration and deceleration increases to compensate for the reduction in vehicle speed, or the vehicle behavior becomes unstable, which could impair the ride quality and comfort for the occupants.

It is therefore an object of the present invention to provide a vehicle motion control device that improves the ride quality and comfort for the occupants when a vehicle deceleration factor such as a shift to preceding vehicle following control occurs on a travel route of a host vehicle, including a bend such as a curved road or lane change.

### Solution to Problem

In order to solve the above problem, a vehicle motion control device of the present invention includes: a first target speed and acceleration calculator that calculates first target speed and acceleration on a basis of a travel route that a host vehicle is traveling on, including a bend; a second target speed and acceleration calculator that calculates second target speed and acceleration on the basis of a factor other than a factor causing the travel route to bend; and a third target speed and acceleration calculator that calculates third target speed and acceleration that are command values when the host vehicle is traveling. In the vehicle motion control device, the third target speed and acceleration calculator generates, on the basis of the first target speed and acceleration and the second target speed and acceleration, a speed and acceleration plan for an interval until the host vehicle reaches the other factor, or a speed and acceleration plan for an interval until the host vehicle reaches a predetermined position determined on the basis of the other factor, and changes a method for calculating the third target speed and acceleration on the basis of an evaluation result of the speed and acceleration plan. Advantageous Effects of Invention

According to a vehicle motion control device or a vehicle motion control method, it is possible to improve the ride quality and comfort for the occupants when a vehicle deceleration factor such as a shift to preceding vehicle following control occurs on a travel route of a host vehicle, including a bend such as a curved road or lane change. Objects, configurations, and effects other than the above will be apparent from the description of the following embodiments.

### Brief Description of Drawings

[FIG. 1] FIG. 1 is a functional block diagram of a vehicle-mounted system according to a first embodiment.
[FIG. 2] FIG. 2 is a functional block diagram of a travel path generation unit according to the first embodiment.
[FIG. 3] FIG. 3 is a functional block diagram of a speed planning part according to the first embodiment.
[FIG. 4] FIG. 4 is an example of a plan view of a travel route.
[FIG. 5] FIG. 5 is a flowchart illustrating an overview of processing in the speed planning part according to the first embodiment.
[FIG. 6A] FIG. 6A is an example of a physical quantity graph when the present invention is not used during travel along the travel route in FIG. 4.
[FIG. 6B] FIG. 6B is an example of a physical quantity graph when third speed and acceleration in step S6 are used during travel along the travel route in FIG. 4.
[FIG. 6C] FIG. 6C is an example of a physical quantity graph for a smaller specified value of longitudinal acceleration in FIG. 6B.
[FIG. 6D] FIG. 6D is an example of a physical quantity graph when the third speed and acceleration in step S7 are used during travel along the travel route in FIG. 4.
[FIG. 7] FIG. 7 is another example of a plan view of the travel route.
[FIG. 8A] FIG. 8A is an example of a physical quantity graph when the present invention is not used during travel along the travel route in FIG. 7.
[FIG. 8B] FIG. 8B is an example of a physical quantity graph when the third speed and acceleration in step S6 are used during travel along the travel route in FIG. 7.
[FIG. 9] FIG. 9 is a flowchart illustrating an overview of processing in the speed planning part according to a second embodiment.
[FIG. 10] FIG. 10 is a functional block diagram of a speed planning part according to a third embodiment.

### Description of Embodiments

Hereinafter, embodiments of a vehicle motion control device according to the present invention will be described using the drawings. Note that, in the following description, substantially the same or similar configurations are denoted with the same reference signs, and redundant description may be omitted. The description of well-known technologies may also be omitted.

### First Embodiment

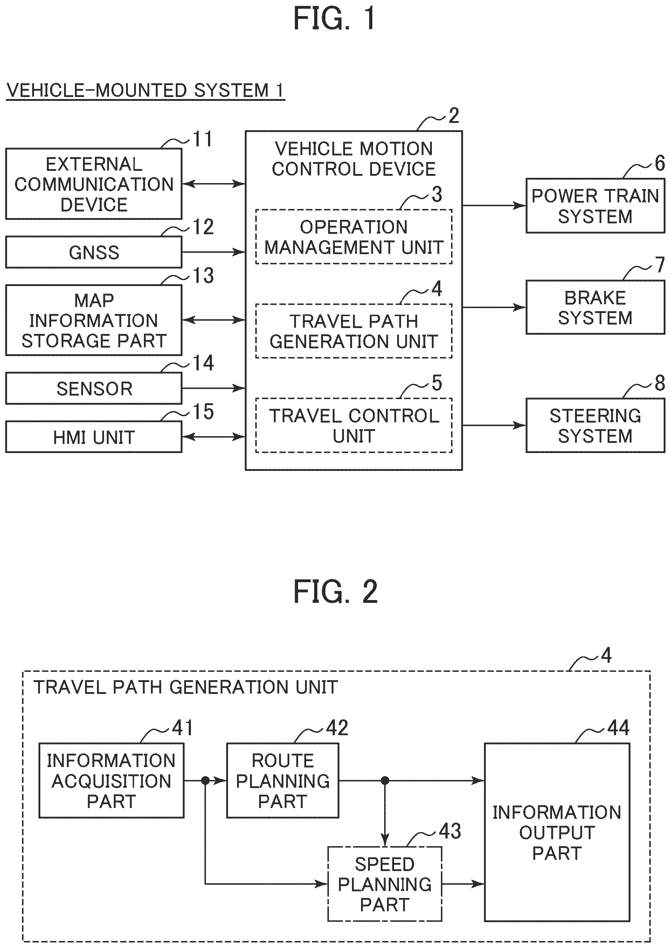

First, a vehicle motion control device 2 according to a first embodiment of the present invention will be described using FIGS. 1 to 8B.

### <Vehicle-mounted system 1>

FIG. 1 is a functional block diagram of a vehicle-mounted system 1 having the vehicle motion control device 2 according to the present embodiment. The vehicle-mounted system 1 is mounted in a host vehicle and executes vehicle motion control such as driving assistance and autonomous driving. As illustrated in the figure, the vehicle-mounted system 1 has an external communication device 11, a global navigation satellite system (GNSS) 12, a map information storage part 13, a sensor 14, a human machine interface (HMI) unit 15, the vehicle motion control device 2, a power train system 6, a brake system 7, and a steering system 8. Explanations will be given below in order.

### <Information source group of vehicle motion control device 2>

The external communication device 11 wirelessly performs vehicle-to-vehicle communication between the host vehicle and other vehicles or road-to-vehicle communication between the host vehicle and a roadside device, and transmits and receives information related to the vehicles, the surrounding environment, and the like.

The GNSS 12 receives radio waves transmitted from artificial satellites such as quasi-zenith satellites and global positioning system (GPS) satellites, and acquires information such as the position of the host vehicle.

The map information storage part 13 stores information related to vehicles, the surrounding environment, and the like, including general road information used in navigation systems or the like, road information with information related to curves such as road width and road curvature, information related to road surface conditions and traffic conditions, and information related to the travel states of other vehicles. Note that the information related to vehicles, the surrounding environment, and the like is sequentially updated with the information acquired through vehicle-to-vehicle communication or road-to-vehicle communication via the external communication device 11.

The sensor 14 includes an external recognition sensor, such as an image sensor, millimeter wave radar, and lidar, for detecting information related to vehicles and the surrounding environment, and a sensor that detects information such as operation by a driver, vehicle speed, acceleration, jerk, angular velocity, and wheel steering angle. Information related to vehicles and the surrounding environment detected by the external recognition sensor includes, for example, information related to various objects around the host vehicle, such as obstacles, signs, lane boundaries, outside lane lines, buildings, pedestrians, and other vehicles. The sensor 14 also recognizes lane boundaries and outside lane lines on the basis of, for example, the difference between the white line and the brightness of the road surface in the image data captured by the image sensor.

The HMI unit 15 displays, on a display, information required by a user from among information received through user input operations, such as travel mode selection and destination setting, information acquired by the external communication device 11, GNSS 12, and sensor 14, and information recorded in the map information storage part 13, and provides voice guidance through a speaker. The HMI unit 15 also generates an alarm to alert the user.

Here, the travel mode includes, for example, a comfort mode, an economy mode, and a sports mode. The travel mode is set arbitrarily by the user, set in advance by the user, or set by an operation management unit 3, which will be described later, on the basis of travel situation information. The speed, acceleration, and jerk of the host vehicle, the speed (hereinafter referred to as "relative speed") and distance (hereinafter referred to as "relative distance") between the host vehicle and the preceding vehicle traveling in front of the host vehicle, and the like are set. Therefore, a specified value setting part 31 of the operation management unit 3 changes the specified value of the vehicle behavior in accordance with the preset travel mode. Note that examples of the travel mode include a shortest time mode that minimizes travel time and a shortest distance mode that minimizes travel distance.

### <Vehicle motion control device 2>

As illustrated in FIG. 1, the vehicle motion control device 2 has the operation management unit 3, a travel path generation unit 4, and a travel control unit 5. The vehicle motion control device 2 is specifically an electronic control unit (ECU) that has hardware including a computing device such as a central processing unit (CPU), main and auxiliary storage devices such as semiconductor memory, and a communication device and that performs overall control of the vehicle, and achieves the various functions of the operation management unit 3 and the like by executing programs loaded into the main storage device with the computing device. Note that in the present embodiment, for convenience of explanation, the operation management unit 3, the travel path generation unit 4, and the travel control unit 5 have separate configurations, but do not necessarily need to have separate configurations, and when these units are used in an actual vehicle, the various functions of these units may be achieved by a higher-level controller.

On the basis of the information acquired by the external communication device 11, the GNSS 12, and the sensor 14, and the map information recorded in the map information storage part 13, the operation management unit 3 generates information related to the position of the host vehicle, information related to various objects around the host vehicle (such as the position and speed of vehicles and the surrounding environment), and information related to vehicle behavior such as longitudinal acceleration, longitudinal jerk, lateral acceleration, yaw rate, and lateral jerk. In addition, the operation management unit 3 periodically transmits the information related to the position of the host vehicle, information related to various objects, and information related to vehicle behavior to other vehicles and roadside devices via the external communication device 11, as well as to the map information storage part 13, thereby successively updating the map information stored in the map information storage part 13. Furthermore, the operation management unit 3 sets route information from the vehicle current position to the destination on the basis of the information related to the position of the host vehicle, information related to various objects, information related to vehicle behavior, and information (for example, travel mode and destination) received by the HMI unit 15. The route information set here includes a specified value for vehicle behavior, which is set by the specified value setting part 31 of the operation management unit 3 in accordance with the travel mode. Note that the information generated or set by the operation management unit 3 may hereinafter be referred to as "travel situation information".

As illustrated in FIG. 2, the travel path generation unit 4 has an information acquisition part 41, a route planning part 42, a speed planning part 43, and an information output part 44. On the basis of the travel situation information transmitted from the operation management unit 3 and acquired by the information acquisition part 41, the travel path generation unit 4 uses the route planning part 42 to generate a route (hereinafter referred to as "route command value P") serving as a travel target for the vehicle to travel on the road. Here, the route command value P is generated on the basis of, for example, either the information related to the vicinity of the host vehicle as acquired by the sensor 14 and the like, or the information obtained by combining distant map information recorded in the map information storage part 13 or the like and the above-mentioned nearby information but the method for generating the route command value P is not limited. Furthermore, the speed planning part 43 generates target speed and acceleration (hereinafter referred to as "speed and acceleration command values") for the vehicle to travel on the road, on the basis of the route command value P and the travel situation information, and the information output part 44 outputs a travel path, which is composed of information such as the route command value P and the speed and acceleration command values, to the travel control unit 5. Note that details of the speed planning part 43 will be described later.

The travel control unit 5 sets target driving force, target braking force, target steering angle, and the like so that the vehicle follows the travel path output from the travel path generation unit 4, and controls the power train system 6, the brake system 7, and the steering system 8.

### <Group of objects to be controlled by vehicle motion control device 2>

The power train system 6 controls the driving force generated by an internal combustion engine, electric motor, and the like on the basis of the operation by the driver and the target driving force output from the travel control unit 5.

The brake system 7 controls the braking force generated by a brake caliper or the like on the basis of the operation by the driver and the target braking force output from the travel control unit 5.

The steering system 8 controls the steering angle of the wheels on the basis of the operation by the driver and the target steering angle output from the travel control unit 5.

### <Speed planning part 43>

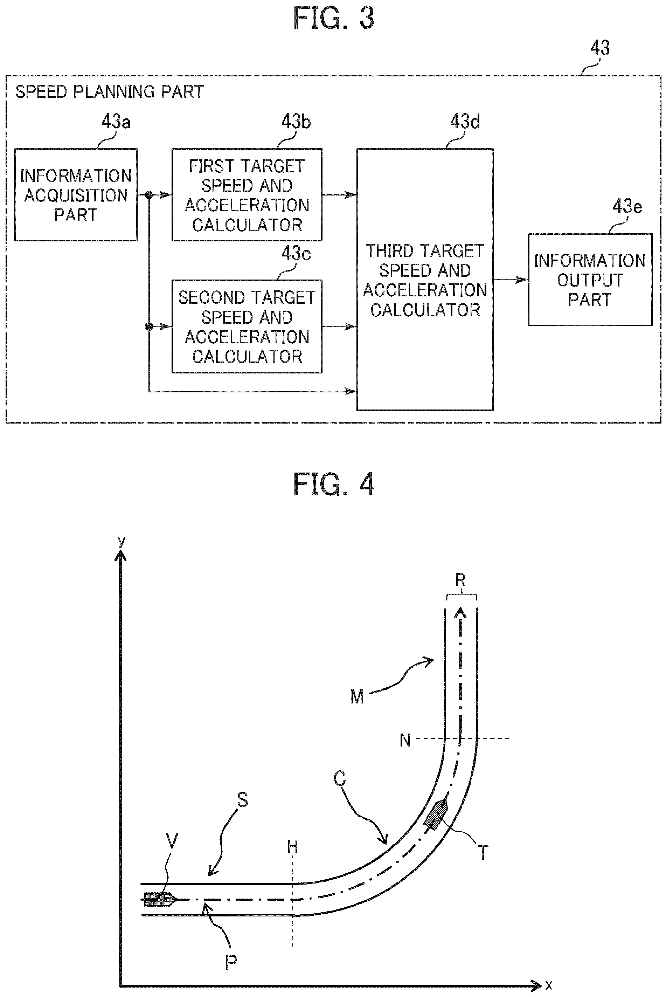

Next, details of the speed planning part 43 of the travel path generation unit 4 will be explained using the functional block diagram of FIG. 3. The speed planning part 43 generates a speed command value for the vehicle on the basis of the position and speed of the vehicle, the upper limit value of behavior, the route command value P, and the like and has an information acquisition part 43a, a first target speed and acceleration calculator 43b, a second target speed and acceleration calculator 43c, a third target speed and acceleration calculator 43d, and an information output part 43e as illustrated in FIG. 3. Explanations will be given below in order.

The information acquisition part 43a acquires travel situation information from the operation management unit 3, acquires the route command value P from the route planning part 42, and outputs the information to each part in the speed planning part 43.

The first target speed and acceleration calculator 43b calculates target speed and acceleration (hereinafter referred to as "first target speed and acceleration") for the vehicle to travel along the route command value P, on the basis of the route command value P acquired from the information acquisition part 43a.

The second target speed and acceleration calculator 43c calculates target speed and acceleration (hereinafter referred to as "second target speed and acceleration") for the vehicle to follow a moving object or avoid a collision with an obstacle, on the basis of the result of detecting, using a detection means such as the sensor 14, a factor (hereinafter referred to as "the other factor"), such as a moving object or obstacle on the route, other than a factor causing the route to bend when generating the route command value P acquired from the information acquisition part 43a, or on the basis of the data acquired through communication with the above-mentioned factor using an external communication means 11 or the like. Here, the other factor considered by the second target speed and acceleration calculator 43c may be a signal, or light such as sunlight, reflected light, or headlights, and the definition of the other factor is not limited.

The third target speed and acceleration calculator 43d calculates speed and acceleration (hereinafter referred to as "third target speed and acceleration"), which are command values for the vehicle to travel along the route command value P, on the basis of whether or not the first target speed and acceleration and the second target speed and acceleration occur, their magnitudes, the positions at which the first target speed and acceleration and the second target speed and acceleration occur, and the like.

The information output part 43e outputs the third target speed and acceleration from the third target speed and acceleration calculator 43d to the information output part 44 as the speed and acceleration command values.

### <Example of processing of speed planning part 43>

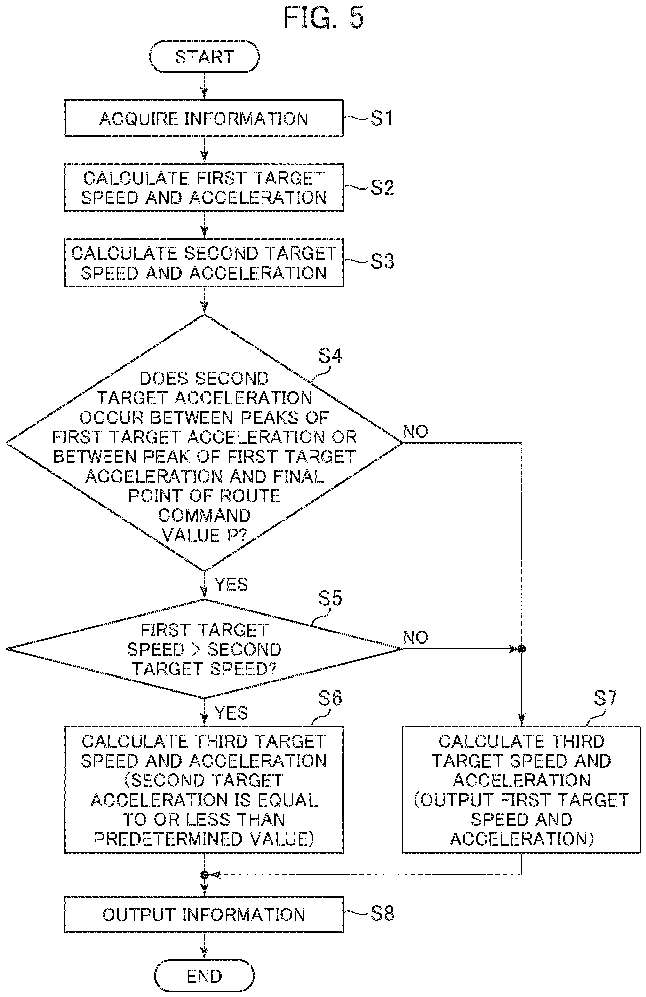

Next, the speed and acceleration command values generated from time to time by the speed planning part 43 during travel along the travel route illustrated in FIG. 4 will be explained using FIGS. 5 to 6D.

FIG. 4 is a plan view of a travel route that a host vehicle V is traveling on, and illustrates the route command value P set within a travelable region R of the host vehicle V at a certain time. In the travelable region R, there is an inflection point H at the starting point of the left turn and an inflection point N at the end point. The section up to the inflection point H is defined as a straight road S, the section between the inflection point H and the inflection point N is defined as a curve C, and the section after the inflection point N is defined as a straight road M. In addition, there is a preceding vehicle T traveling in front of the host vehicle V on the curve C in the travelable region R. Note that the curve C is an example of a host-vehicle travel route including a bend, and the vehicle control described below may be applied to host-vehicle control during a lane change.

FIG. 5 is a flowchart of the speed planning part 43 according to the first embodiment.

First, in step S1, the information acquisition part 43a of the speed planning part 43 acquires travel situation information from the information acquisition part 41 and acquires the route command value P from the route planning part 42.

Next, in step S2, the first target speed and acceleration calculator 43b of the speed planning part 43 calculates the first target speed and acceleration such that the acceleration or jerk occurring when the host vehicle V travels alone along the route command value P fall within a specified value range, on the basis of the travel situation information and route command value P acquired in step S1**.**

In step S3, the second target speed and acceleration calculator 43c of the speed planning part 43 generates the second target speed and acceleration such that the relative speed, relative distance, acceleration, and jerk when the host vehicle V follows the preceding vehicle T fall within the specified value range, on the basis of the travel situation information acquired in step S1**.**

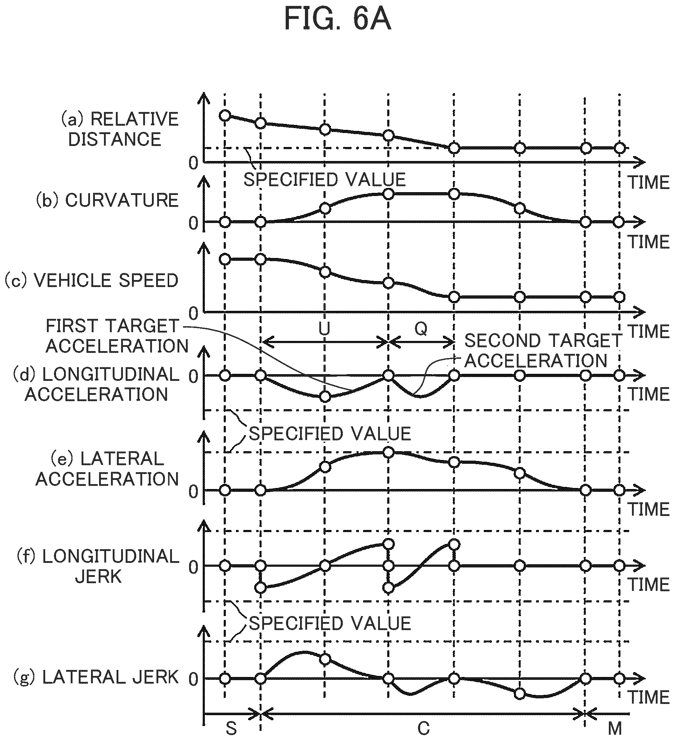

Here, using FIG. 6A, a problem that may arise when the host vehicle V entering the curve C in FIG. 4 shifts from a travel state in which the host vehicle V travels alone at the first target speed and acceleration calculated in step S2 to a travel state in which the host vehicle V follows the slower preceding vehicle T at the second target speed and acceleration calculated in step S3 will be described. Note that in FIG. 6A, (a) is a temporal change in the relative distance between the host vehicle V and the preceding vehicle T, (b) is a temporal change in the curvature of the route command value P, (c) is a temporal change in the vehicle speed of the host vehicle V, (d) is a temporal change in the longitudinal acceleration of the host vehicle V, (e) is a temporal change in the lateral acceleration of the host vehicle V, (f) is a temporal change in the longitudinal jerk of the host vehicle V, and (g) is a temporal change in the lateral jerk of the host vehicle V.

As can be seen from the section U and the section Q in FIG. 6A(d), in FIG. 6A, a fluctuation in longitudinal acceleration due to the first target acceleration and a fluctuation in longitudinal acceleration due to the second target acceleration occur twice in succession, and these are considered to have a negative impact on the ride quality and comfort for the occupants. Therefore, it can be seen that such vehicle control as to immediately switch from the first target acceleration to the second target acceleration is undesirable in order to improve the ride quality and the like for the occupants. Therefore, in the present embodiment, steps S4 to S7 described below are provided in order to calculate the third speed and acceleration command values that enable improved ride quality and comfort for the occupants.

First, in step S4, the third target speed and acceleration calculator 43d of the speed planning part 43 evaluates whether a speed and acceleration plan for an interval until the host vehicle reaches the other factor of a certain kind (for example, a moving object, an obstacle, or the like) or a speed and acceleration plan for an interval until the host vehicle reaches a predetermined position determined on the basis of the other factor of a different kind (data, signal, light, or the like from a moving object) is likely to impair the ride quality and comfort for the occupants. Then, if there is a possibility of impairing the ride quality and comfort, the process proceeds to step S5; otherwise, the process proceeds to step S7.

Specifically, the third target speed and acceleration calculator 43d determines whether or not the second target acceleration occurs between the peaks of the first target acceleration occurring when the host vehicle V travels along the route command value P, or between the peak of the first target acceleration and the final point of the route command value P, on the basis of the travel situation information and route command value P acquired in step S1, and the first target speed and acceleration calculated in step S2, and the second target speed and acceleration calculated in step S3.

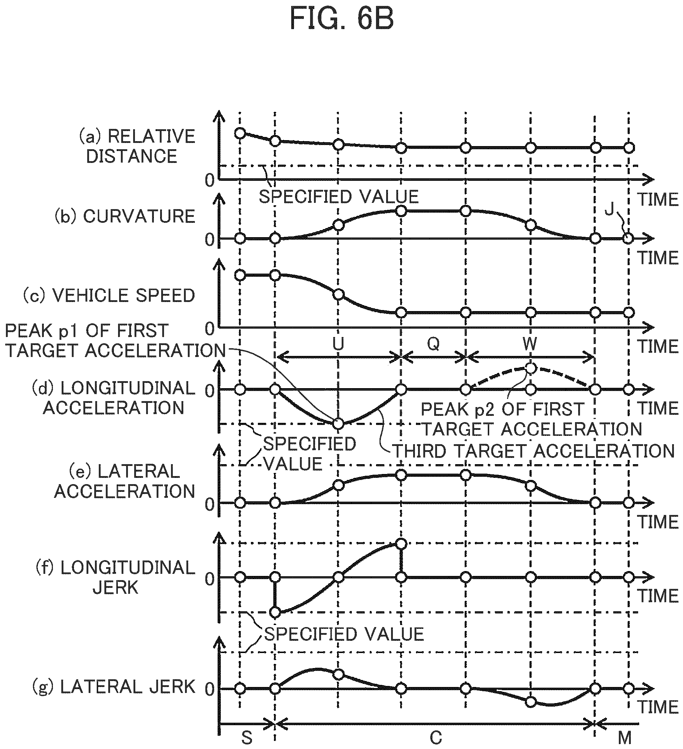

Here, the peaks of the first target acceleration are, for example, a peak p1 of the first target acceleration indicated by the solid line in the section U in FIG. 6B(d) and a peak p2 of the first target acceleration indicated by the dashed line in the section W.

In addition, the final point of the route command value P is, for example, a point J illustrated in FIG. 6B(b). Therefore, in the example of FIG. 6B, if the second target acceleration occurs between the peaks p1 and p2 of the first target acceleration, or between the peak p2 of the first target acceleration and the final point J of the route command value P, it is determined that there is a possibility of impairing the ride quality and comfort for the occupants (step S4, YES), and the process proceeds to step S5; otherwise, it is determined that there is no possibility of impairing the ride quality and comfort for the occupants (step S4, NO), and the process proceeds to step S7.

Next, in step S5, the third target speed and acceleration calculator 43d determines whether the first target speed for solo travel, which is included in the speed and acceleration plan for the host vehicle V to travel along the route command value P, is always higher than the second target speed for following travel. Then, if the first target speed is higher than the second target speed, that is, if the host vehicle V approaches the preceding vehicle T (step S5, YES), the process proceeds to step S6, and if the first target speed is lower than or equal to the second target speed, that is, if the host vehicle V does not approach the preceding vehicle T (step S5, NO), the process proceeds to step S7.

In step S6, the third target speed and acceleration calculator 43d calculates the third target speed and acceleration (command values) such that the second target acceleration that occurs between the peaks of the first target acceleration occurring when the host vehicle V travels along the route command value P becomes equal to or less than a predetermined value.

FIG. 6B is an example of physical quantities related to the vehicle behavior of the host vehicle V occurring when the host vehicle V travels at the third speed and acceleration command values generated in step S6, and the configuration of the graph is common to FIG. 6A. Note that the dashed line in the section W in FIG. 6B(d) illustrates the first target acceleration that occurs when the host vehicle V travels along the route command value P. Meanwhile, the solid line in FIG. 6B(d) indicates the third target acceleration (command value) calculated by adding the acceleration corresponding to the second target acceleration in FIG. 6A(d) to the first target acceleration in the section U so that the second target acceleration (see FIG. 6A(d)) occurring in the section Q in FIG. 6B(d) becomes a predetermined value or less, for example, zero, in order to suppress vehicle vibration by minimizing the number of times the longitudinal acceleration occurs. Note that as can be seen from the comparison between FIGS. 6A(d) and 6B(d), the absolute value of the acceleration peak in the section U is larger in FIG. 6B(d) than in FIGS. 6A(d) within the specified value range.

As a result, in FIG. 6B, by using the speed and acceleration command values calculated in step S6, the number of times the acceleration fluctuation in (d) longitudinal acceleration occurs is suppressed from two to one, and furthermore, (d) longitudinal acceleration, (e) lateral acceleration, (f) longitudinal jerk, and (g) lateral jerk fall within the specified value range, so that the ride quality and comfort for the occupants can be sufficiently ensured.

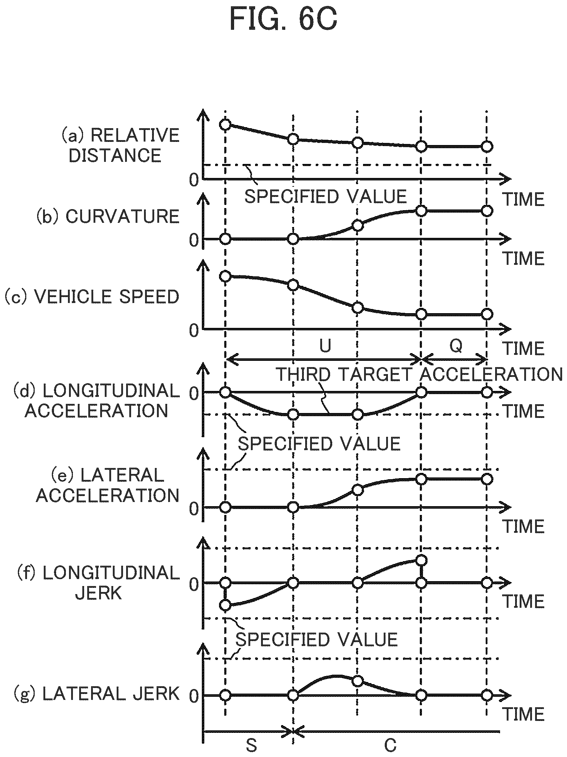

In addition, FIG. 6C is an example of physical quantities related to the vehicle behavior of the host vehicle V occurring when the host vehicle V travels at the third speed and acceleration command values generated in step S6, and the configuration of the graph is common to FIG. 6A and the like. FIG. 6C illustrates a case where the specified value of (d) longitudinal acceleration is smaller than in FIG. 6B, and a situation where in order to suppress vibration and keep (d) longitudinal acceleration and the like within the specified value range, by using the target speed and acceleration command values calculated in step S6 to move the deceleration start point toward the near end (in the direction toward the host vehicle V) when decelerating and move the acceleration end point toward the far end (in the direction away from the host vehicle V) when accelerating, the third target speed and acceleration such that the physical quantities related to vehicle behavior fall within the specified value range is calculated, so that the ride quality and comfort for the occupants can be sufficiently ensured.

In step S7, since the second target speed and acceleration need not be considered, the third target speed and acceleration calculator 43d outputs the first target speed and acceleration calculated in step S2 as they are as the third target speed and acceleration (command values).

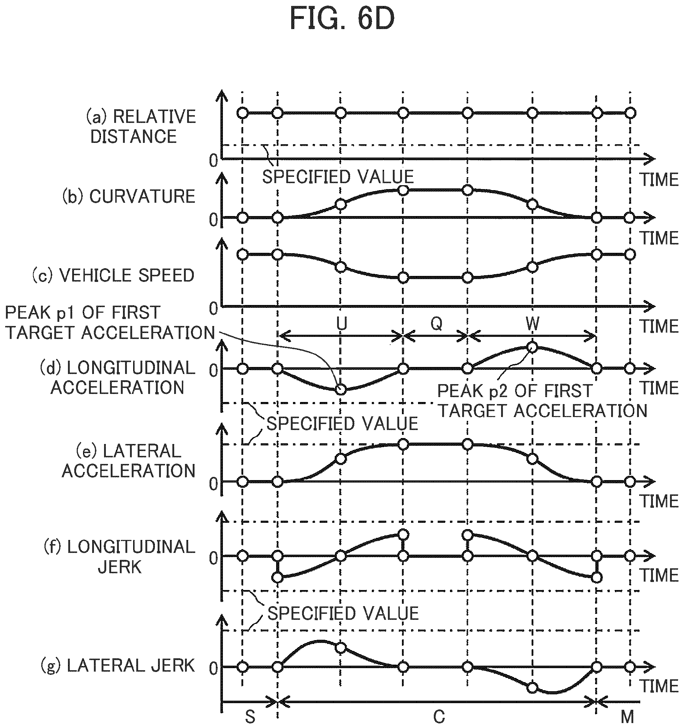

FIG. 6D is an example of physical quantities related to the vehicle behavior of the host vehicle V occurring when the host vehicle V travels at the third speed and acceleration command values generated in step S7, and the configuration of the graph is common to FIG. 6A and the like. FIG. 6D illustrates a case where the vehicle speed of the preceding vehicle T traveling on the curve C in FIG. 4 is equal to or greater than that of the host vehicle V (when the host vehicle V cannot catch up with the preceding vehicle T), and a situation where by setting the first target speed and acceleration calculated in step S2 as they are to the third target speed and acceleration, the number of times of occurrences of acceleration and deceleration is minimized, and (d) longitudinal acceleration and the like fall within the specified value range, so that the ride quality and comfort for the occupants can be sufficiently ensured.

Finally, in step S8, the information output part 43e of the speed planning part 43 outputs the third target speed and acceleration calculated in either step S6 or step S7 as the speed and acceleration command values to the information output part 44 of the travel path generation unit 4. Note that since any of the speed and acceleration command values output in step S8 are capable of keeping physical quantities related to vehicle behavior within the specified value range while suppressing vehicle vibration, the travel control unit 5, which receives the speed command value from the information output part 44, can control the power train system 6, the brake system 7, and the steering system 8 so as to achieve vehicle control with good riding comfort.

### <Another example of processing of speed planning part 43>

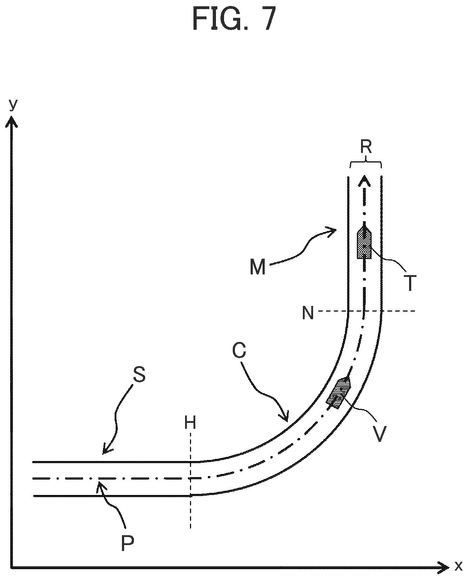

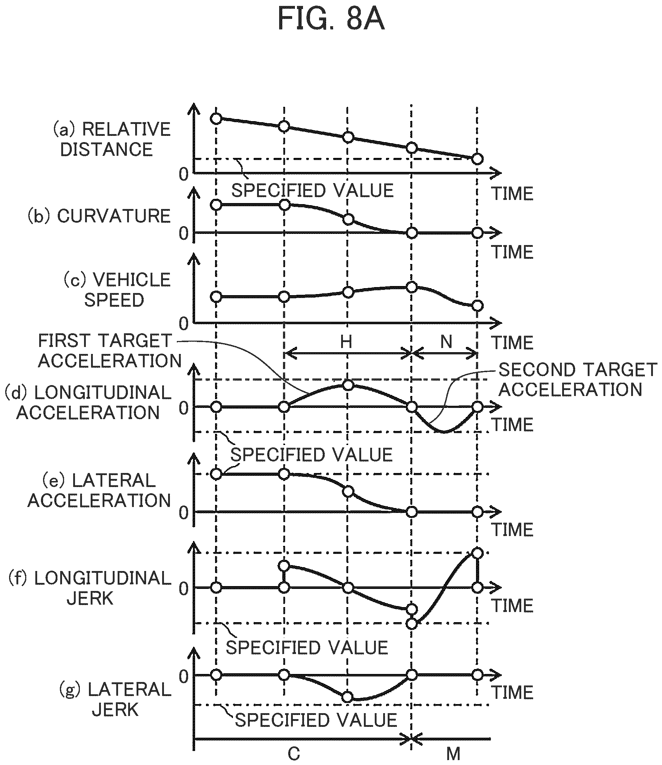

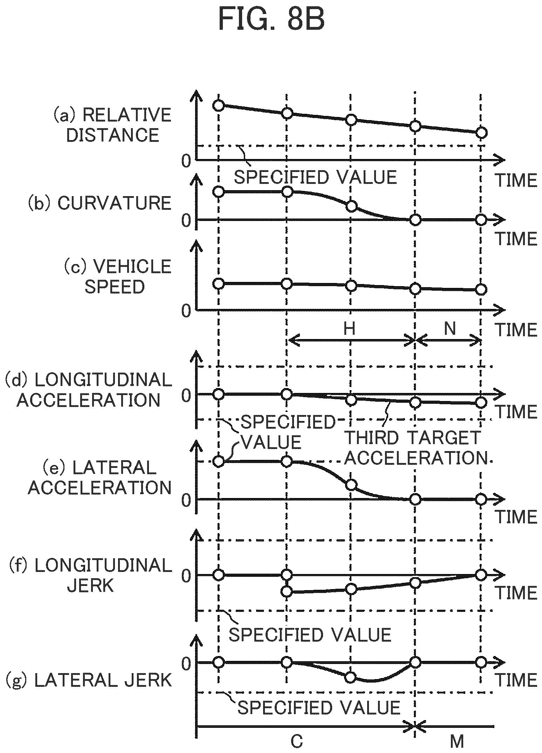

Next, another example of the processing of the speed planning part 43 will be described using FIGS. 7 to 8B. FIG. 7 is another example of a plan view of the travel route that the host vehicle V is traveling on, and is common to FIG. 4 except for the positions of the host vehicle V and the preceding vehicle T. In FIG. 4, the host vehicle V is traveling on the straight road S in the travelable region R, and the preceding vehicle T is traveling on the curve C ahead of the host vehicle V, but in FIG. 7, the host vehicle V is traveling on the curve C in the travelable region R and the preceding vehicle T is traveling on the straight road M ahead of the host vehicle V. That is, while FIGS. 6A to 6D corresponding to FIG. 4 illustrate temporal changes in each physical quantity when the host vehicle V enters the curve C, FIGS. 8A and 8B corresponding to FIG. 7 illustrate temporal changes in each physical quantity when the host vehicle V exits the curve C.

FIGS. 8A is an example of physical quantities related to vehicle behavior occurring when the host vehicle V exiting the curve C in FIG. 7 shifts from a travel state in which the host vehicle V travels alone at the first target speed and acceleration calculated in step S2 to a travel state in which the host vehicle V follows the slower preceding vehicle T at the second target speed and acceleration calculated in step S3, and the configuration of the graph is common to FIG. 6A and the like.

As can be seen from the section H and the section N in FIG. 8A (d), in FIGS. 8A, a fluctuation in longitudinal acceleration due to the first target acceleration and a fluctuation in longitudinal acceleration due to the second target acceleration occur twice in succession, and these are considered to have a negative impact on the ride quality and comfort for the occupants. Therefore, it can be seen that such vehicle control as to immediately switch from the first target acceleration to the second target acceleration is undesirable in order to improve the ride quality and the like for the occupants.

Meanwhile, FIG. 8B is an example of physical quantities related to the vehicle behavior of the host vehicle V occurring when the host vehicle V travels with the third speed and acceleration calculated in step S6 as command values, and the configuration of the graph is common to FIG. 6A and the like.

The solid line in FIG. 8B indicates the third target acceleration (command value) calculated by adding the acceleration corresponding to the second target acceleration in FIG. 8A(d) to the first target acceleration in the section H so that the second target acceleration (see FIG. 8A(d)) occurring in the section N is set to a predetermined value or less, for example, zero, in order to suppress vehicle vibration by minimizing the number of times longitudinal acceleration occurs.

As a result, in FIG. 8B, by using the speed and acceleration command values calculated in step S6, the number of times (d) longitudinal acceleration occurs is suppressed from two to one, and furthermore, (d) longitudinal acceleration, (e) lateral acceleration, (f) longitudinal jerk, and (g) lateral jerk fall within the specified value range, so that the ride quality and comfort for the occupants can be sufficiently ensured.

Thus, in the speed and acceleration control according to the present embodiment as illustrated in FIGS. 6A to 6D or FIGS. 8A and 8B, the first target speed and acceleration are calculated on the basis of the host-vehicle travel route including a bend such as a curved road and lane change, and the second target speed and acceleration are calculated on the basis of a factor, such as a preceding vehicle or signal, other than a factor causing the travel route to bend. If the occurrence of the second target speed and acceleration is predicted and the first target speed is greater than the second target speed, the third target speed and acceleration calculated by adding the second target acceleration to the first target acceleration so that the second target acceleration is equal to or less than a predetermined value are set as the target speed and acceleration of the host vehicle. If the occurrence of the second target speed and acceleration is not predicted, or if the first target speed is equal to or less than the second target speed, the first target speed and acceleration are set as the target speed and acceleration of the host vehicle to minimize the number of times of acceleration and deceleration, while gradually expanding the range in which the longitudinal acceleration occurs until the physical quantities related to vehicle behavior fall within the specified value range. Thus, the physical quantities related to the vehicle behavior can be kept within the specified value range that does not impair the ride quality and comfort for the occupants, while minimizing vibration.

As described above, the vehicle control device according to the present embodiment allows improvements in the ride quality and comfort for the occupants when a host vehicle deceleration factor such as a shift to preceding vehicle following control occurs on a host vehicle travel route that includes a bend such as a curved road or lane change.

### Second Embodiment

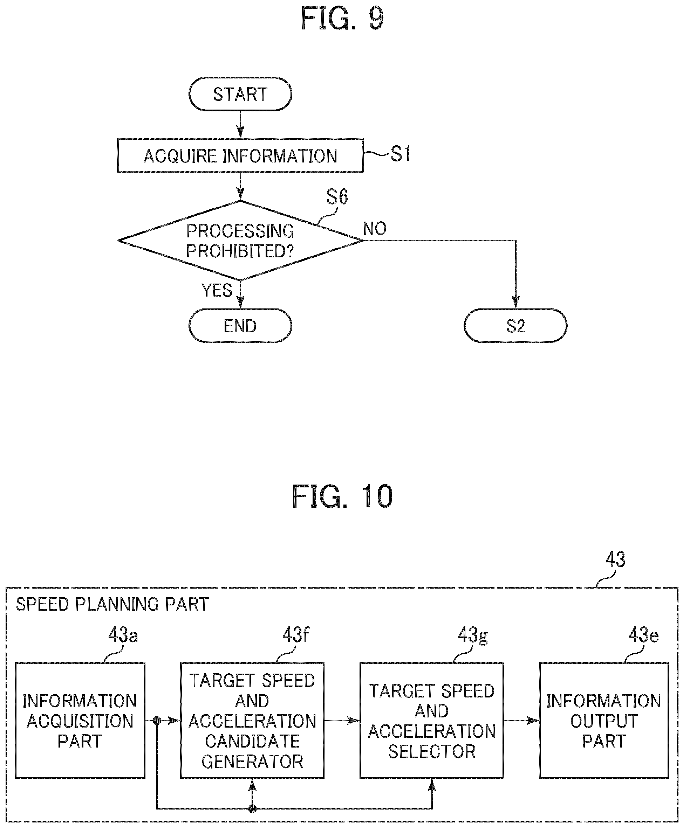

Next, the vehicle motion control device 2 according to a second embodiment of the present invention will be described using FIG. 9. Note that redundant explanation of common points with the first embodiment will be omitted.

FIG. 9 is a flowchart of the speed planning part 43 according to the second embodiment. The flowchart according to the present embodiment as illustrated here is based on the flowchart according to the first embodiment illustrated in FIG. 5, with step S1A added between steps S1 and S2.

In the added step S1A, the speed planning part 43 determines whether or not to calculate speed and acceleration command values in the speed planning part 43 on the basis of a flag generated by a higher-level controller (for example, the operation management unit 3) than the speed planning part 43. Then, if the flag indicates that processing is prohibited (step S1A, YES), the processing ends, and the speed planning part 43 does not calculate any speed and acceleration command values. Meanwhile, if the flag indicates that processing is permitted (step S1A, NO), then the speed planning part 43 proceeds to step S2 and subsequent steps to calculate desired speed and acceleration command values.

Thus, if the calculation processing for speed and acceleration command values in the speed planning part 43 is prohibited by the higher-level controller, for example, when an abnormality is detected in a sensor or system, by shifting to the speed and acceleration control by the higher-level controller with emphasis on avoidance performance, safety is improved because collisions with obstacles or the like can be avoided, although ride quality may be deteriorated.

### Third Embodiment

Next, the vehicle motion control device 2 according to a third embodiment of the present invention will be described using FIG. 10. Note that redundant explanation of common points with the above-described embodiment will be omitted.

FIG. 10 is a functional block diagram of the speed planning part 43 according to the third embodiment. The speed planning part 43 according to the present embodiment as illustrated here is configured by replacing the first target speed and acceleration calculator 43b, the second target speed and acceleration calculator 43c, and the third target speed and acceleration calculator 43d according to the first embodiment as illustrated in FIG. 3 with a target speed and acceleration candidate generator 43f, and further adding a target speed and acceleration selector 43g.

The target speed and acceleration candidate generator 43f generates a plurality of speed-and-acceleration command values such that the physical quantities related to the vehicle behavior of the host vehicle V occurring during travel along the route command value P fall within the specified value range, on the basis of the travel situation information and route command value P acquired by the information acquisition part 43a, and outputs the result to the target speed and acceleration selector 43g.

Then, on the basis of the current travel mode (such as shortest time mode or economy mode) indicated by the travel situation information from the information acquisition part 43a and a plurality of speed-and-acceleration command value candidates from the target speed and acceleration candidate generator 43f, the target speed and acceleration selector 43g selects one of the speed-and-acceleration command value candidates as a speed-and-acceleration command value, and the information output part 43e outputs the selected speed-and-acceleration command value to the travel control unit 5.

For example, if the travel situation information indicates the shortest time mode, the speed-and-acceleration command value candidate with the shortest travel time is selected from among the plurality of speed-and-acceleration command value candidates generated by the target speed and acceleration candidate generator 43f. If the travel situation information indicates the economy mode, the speed-and-acceleration command value candidate with the lowest energy consumption is selected from among the plurality of speed-and-acceleration command value candidates. In other words, the target speed and acceleration selector 43g selects the speed-and-acceleration command value with the shortest travel time from among the plurality of speed-and-acceleration command value candidates or the speed-and-acceleration command value with the lowest energy consumption from among the plurality of speed-and-acceleration command value candidates.

In addition, to enable the target speed and acceleration candidate generator 43f to generate the plurality of speed-and-acceleration command values, the specified value setting part 31 of the operation management unit 3 according to the present embodiment may set a plurality of specified values on the basis of the vehicle occupants, the mass, size and arrangement of a cargo, and the state of the route that the vehicle is traveling on. This allows the target speed and acceleration candidate generator 43f to generate the plurality of speed-and-acceleration command values according to the number of occupants, seating position, or the like. Therefore, the target speed and acceleration selector 43g can further improve ride quality during vehicle travel by selecting the speed command value according to the number of occupants, or the like.

Thus, the vehicle motion control device according to the third embodiment not only provides effects similar to those of the first and second embodiments, but also can control vehicle motion according to the selection of travel mode and vehicle loading conditions.

The present invention is not limited to the above-described embodiments, and further includes various modifications.

For example, the above-described embodiments have been described in detail in order to facilitate the understanding of the present invention, and the present invention is not necessarily limited to those including all of the described configurations. In addition, part of the configuration of one embodiment can be replaced with the configurations of other embodiments. In addition, the configuration of the one embodiment can also be added with the configurations of other embodiments. In addition, part of the configuration of each embodiment can also be deleted, added with some of other configurations, or replaced with some of the other configuration.

### List of Reference Signs

- 1: vehicle-mounted system
- 11: external communication device
- 12: GNSS
- 13: map information storage part
- 14: sensor
- 15: HMI unit
- 2: vehicle motion control device
- 3: operation management unit
- 31: specified value setting part
- 4: travel track generation unit
- 41: information acquisition part
- 42: route planning part
- 43: speed planning part
- 43a: information acquisition part
- 43b: first target speed and acceleration calculator
- 43c: second target speed and acceleration calculator
- 43d: third target speed and acceleration calculator
- 43e: information output part
- 44: information output part
- 5: travel control unit
- 6: power train system
- 7: brake system
- 8: steering system

## Claims

1. A vehicle motion control device comprising:
a first target speed and acceleration calculator that calculates first target speed and acceleration on a basis of a travel route that a host vehicle is traveling on, including a bend;
a second target speed and acceleration calculator that calculates second target speed and acceleration on the basis of a factor other than a factor causing the travel route to bend; and
a third target speed and acceleration calculator that calculates third target speed and acceleration that are command values when the host vehicle is traveling, wherein
the third target speed and acceleration calculator
generates, on the basis of the first target speed and acceleration and the second target speed and acceleration, a speed and acceleration plan for an interval until the host vehicle reaches the other factor, or a speed and acceleration plan for an interval until the host vehicle reaches a predetermined position determined on the basis of the other factor, and
changes a method for calculating the third target speed and acceleration on the basis of an evaluation result of the speed and acceleration plan.

2. The vehicle motion control device according to claim 1, wherein
the other factor includes a moving object, obstacle, signal, light, or communication in a direction of travel of the host vehicle or around the host vehicle.

3. The vehicle motion control device according to claim 1 or 2, wherein
the third target speed and acceleration calculator calculates the third target speed and acceleration so that the third target speed and acceleration fall within a predetermined specified values.

4. The vehicle motion control device according to claim 3, wherein
the specified values are set on the basis of mass, size, and arrangement of vehicle occupants and cargo, an acceptable physical quantity, and a state of the route that the vehicle is traveling on.

5. The vehicle motion control device according to claim 1 or 2, wherein
the second target speed and acceleration calculator calculates the second target speed and acceleration on the basis of a result of detection of the other factor by a detection means or data acquired by communication with the other factor.

6. The vehicle motion control device according to claim 1 or 2, wherein
when the second target speed and acceleration are predicted to occur and the first target speed is greater than the second target speed, the third target speed and acceleration calculator calculates the third target speed and acceleration by adding the second target acceleration to the first target acceleration so that the second target acceleration is equal to or less than a predetermined value.

7. The vehicle motion control device according to claim 1 or 2, wherein
when occurrence of the second target speed and acceleration is not predicted, or when the first target speed is equal to or less than the second target speed, the third target speed and acceleration calculator sets the first target speed and acceleration to the third target speed and acceleration.

8. The vehicle motion control device according to claim 1 or 2, wherein
when a flag output from a higher-level controller indicates that processing is permitted, the first to third target speeds and accelerations are calculated, and
when the flag indicates that processing is prohibited, the first to third target speeds and accelerations are not calculated.

9. A vehicle motion control method executed by a computing device, the method comprising:
a first step for calculating first target speed and acceleration on a basis of a travel route that a host vehicle is traveling on, including a bend;
a second step of calculating second target speed and acceleration on the basis of a factor other than a factor causing the travel route to bend; and
a third step of calculating third target speed and acceleration to be used when the host vehicle is traveling, on the basis of the first target speed and acceleration and the second target speed and acceleration, wherein,
in the third step,
a speed and acceleration plan for an interval until the host vehicle reaches the other factor or a speed and acceleration plan for an interval until the host vehicle reaches a predetermined position determined on the basis of the other factor is generated, and
a method for calculating the third target speed and acceleration is changed on the basis of an evaluation result of the speed and acceleration plan.
